# EUROPEAN PATENT SPECIFICATION

(11) **EP 3 490 386 B1**
(45) Date of publication and mention of the grant of the patent: **05.08.2020**
(21) Application number: 17757572.7
(22) Date of filing: 27.07.2017
(51) Int. Cl.: A23G 9/04, A23G 9/12, A23G 9/22, A23G 9/28

(54) **APPARATUS FOR PREPARING AND DISPENSING FOOD PRODUCTS**
VORRICHTUNG ZUR HERSTELLUNG UND AUSGABE VON LEBENSMITTELPRODUKTEN
APPAREIL DE PRÉPARATION ET DE DISTRIBUTION DE PRODUITS ALIMENTAIRES

(30) Priority: 29.07.2016 IT 201600080373
(43) Date of publication of application: 05.06.2019
(73) Proprietor: S.P.M. Drink Systems S.P.A., 41057 Spilamberto (MO) (IT)
(72) Inventor: GRAMPASSI, Enrico, 41057 Spilamberto (MO) (IT)
(74) Representative: Manzella & Associati
(86) International application number: PCT/IB2017/054560
(87) International publication number: WO 2018/020449

(56) References cited:
- EP-A1- 0 799 575
- US-A- 3 298 190
- US-A- 3 698 203
- US-A- 6 058 721

## Description

### Technical Field

The present invention concerns an apparatus for preparing and dispensing food products, such as for example hot beverages or refrigerated products of the type of creamy ice-creams, sorbets and the like.

### Background Art

Nowadays, apparatuses are known that allow to prepare and dispense refrigerated products of the type of traditional water-based slushes or alternatively creamy products such as ice-creams, sorbets, coffee creams and the like.

These known apparatuses are generally constituted by a tank suitable to contain the product to be prepared and dispensed, wherein a cooling device for cooling the product to the appropriate temperature and a mixing device that causes the continuous circulation of the product inside the tank are arranged. The mixing device, consisting for example of a screw member driven in rotation by a gearmotor member according to an axis longitudinal to the tank, is predisposed to convey the cooled product towards a front zone, where a dispenser device of the product is arranged. The dispenser device is provided with a shutter element that can be operated through an external lever member.

The cooling device is usually constituted by a coil evaporator arranged inside a tubular body, substantially cylindrical, arranged according to the horizontal axis of the tank. The evaporator is connected with a refrigeration system housed inside a base body on which the containment tank of the product is mounted. The screw member of the mixing device winds on the tubular body of the evaporator.

An apparatus for dispensing refrigerated products of this type is disclosed for example in international application WO 03/082022.

Apparatuses are also known that allow to produce and dispense hot beverages, for example beverages obtained by mixing water with soluble products in previously set doses. In particular, there are apparatuses similar to the ones previously described but provided with a heating device, arranged inside the containment tank of the product.

In the considered field, specifically regarding apparatuses for preparing and dispensing refrigerated products, there is a need to check the consistency of the product in order to keep it within the prescribed limits. Lowering the temperature of the product inside the tank results in an increase in its consistency, so it is necessary to periodically stop the operation of the cooling device. Such a requirement has not found at present an adequate solution, in particular capable of varying the consistency of the dispensed products as required.

Patent application EP0799575 discloses an apparatus for preparing and dispensing refrigerated drinks wherein the gearmotor member of the mixing device is mounted swinging on its axis, a contrasting force being applied against the rotation of the gearmotor member about such axis. A sensor is provided to detect the degree of rotation and stop the refrigeration assembly when detecting a rotation degree greater than a predetermined value.

However, this solution does not allow for an optimum control of the consistency of the dispensed products and, in particular, for varying such consistency as required.

An analogous problem arises for apparatuses for preparing and dispensing hot drinks having similar construction and functional features.

### Disclosure

The task of the present invention is that of solving the aforementioned problem, devising an apparatus for preparing and dispensing food products, such as hot beverages and refrigerated products, allowing to carry out in an optimal manner the control of the consistency of the same products.

Within such task, it is a further scope of the present invention to provide an apparatus allowing to vary the consistency of the dispensed products as required.

Another scope of the invention is to provide an apparatus having a simple constructive and functional conception, a surely reliable functioning and versatile use, as well as relatively economic costs.

The cited scopes are reached, according to the present invention, by the apparatus for preparing and dispensing food products according to claim 1.

According to the present invention, the apparatus for preparing and dispensing food products comprises control means for controlling the consistency of the product being prepared within a containment tank of said product; the control means comprise a first microswitch and a second microswitch predisposed to be selectively operated by the angular rotation of means associated with a mixing device predisposed to cause the continuous circulation of the product within said containment tank, respectively, when the force exerted by elastic means, contrasting the resistive torque opposing the rotation of said mixing device, exceeds a first threshold value and a second threshold value.

Advantageously, said means predisposed to selectively operate said first microswitch and said second microswitch comprise a gearmotor predisposed to operate in rotation said mixing device according to an axis substantially longitudinal to said containment tank.

Advantageously, the gearmotor can tilt according to said axis substantially longitudinal to said containment tank.

According to an aspect of the invention, said first microswitch and said second microswitch are predisposed to be selectively operated by the angular rotation of said gearmotor as a function of said torque that opposes the rotation of said mixing device.

Advantageously, said angular rotation of said gearmotor is produced when said resistive torque opposing the rotation of said mixing device overcomes the force exerted by said elastic means.

According to an aspect of the invention, the selective operation of said first microswitch and second microswitch occurs respectively when a first degree of rotation and a second degree of rotation of the gearmotor are reached.

Advantageously, said first microswitch is arranged in such a position as to be intercepted by said angular rotation of the gearmotor before said second microswitch.

Preferably, said second microswitch is predisposed to be operated through a lever associated with said first microswitch.

Preferably, said first microswitch and second microswitch are predisposed to be selectively operated through the operation of selection means depending on a predetermined consistency of the product being prepared.

Preferably, said selection means comprise a diverting member.

Preferably, the signal generated by the operation of said microswitches is sent to an electronic control board of the apparatus for managing said cooling or heating means.

Preferably, said gearmotor has a casing that is mounted tilting on a fixed part of the apparatus according to said axis substantially longitudinal to said containment tank.

Preferably, said mixing device comprises a screw member which is driven in rotation by a shaft arranged along said axis substantially longitudinally to said containment tank and associated with said gearmotor.

In an embodiment, the apparatus comprises a cooling device arranged within said tank for cooling said product.

Said control means of the consistency of the product being prepared within a containment tank are predisposed to selectively control the stop of said cooling device, respectively, upon exceeding said first threshold value and said second threshold value.

Preferably, said cooling device comprises a coil evaporator arranged inside a substantially cylindrical tubular body, mounted with horizontal axis within said tank.

Preferably, said screw member of the mixing device extends on the outer surface of said cylindrical tubular body of the cooling device.

Advantageously, the apparatus comprises product temperature control means arranged within said containment tank at the dispensing zone.

Preferably, said temperature control means comprises a temperature sensor associated with said cooling device in proximity to the front area of said containment tank.

Preferably, said elastic means comprise a helical spring pressing on a casing of said gearmotor and having compression adjustable through an adjusting screw.

The present invention also relates to a method for controlling the consistency of the product in an apparatus for preparing and dispensing food products which provides to selectively operate said first microswitch and second microswitch through the angular rotation of said gearmotor member and to command the stop of said cooling or heating means depending on the resistive torque opposing the rotation of said mixing device.

Advantageously, the method provides to selectively operate said first microswitch and second microswitch through the angular rotation of said gearmotor, respectively, upon exceeding a first threshold value and a second threshold value of the resistance offered by said elastic means.

### Description of Drawings

Details of the invention shall be more apparent from the detailed description of a preferred embodiment of the apparatus for preparing and dispensing refrigerated products according to the invention, illustrated for indicative purposes in the attached drawings, wherein:

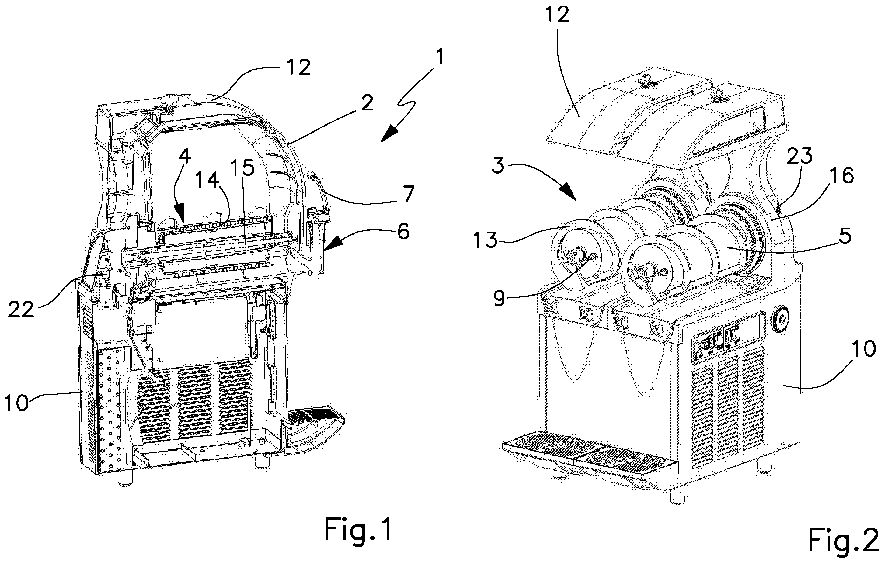

Figure 1 shows a rear perspective view of the apparatus according to the invention, in cross-section according to a longitudinal plane;
Figure 2 shows a front perspective view of the same apparatus with removed parts to show the internal members;

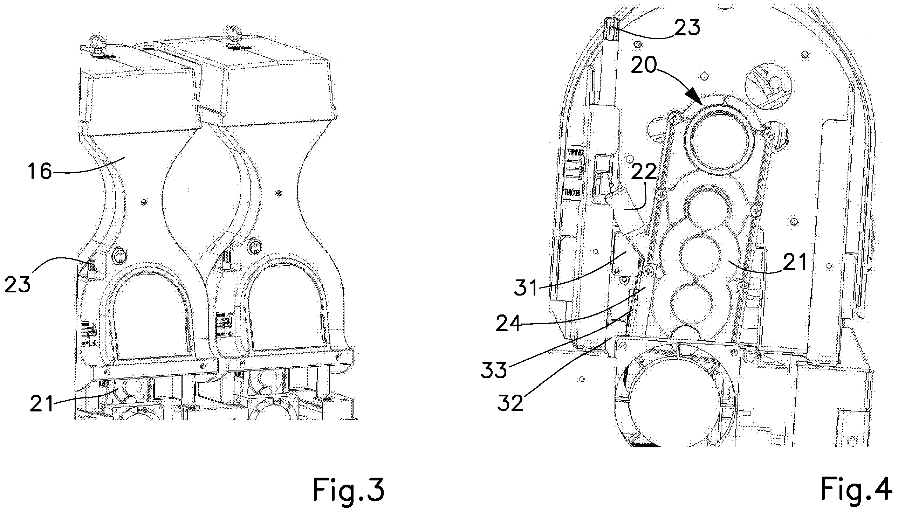

Figure 3 shows a view of a rear portion of the apparatus according to the invention;
Figure 4 shows a detailed view of said rear portion of the apparatus with removed parts to show the internal members.
Figure 5 shows the same detailed view with further removed parts.

### Best Mode

With particular reference to such Figures, the apparatus for preparing and dispensing refrigerated products, such as for example slushes, creamy ice-creams, sorbets and the like, according to the invention is indicated in its entirety with 1.

The apparatus 1 comprises at least one tank 2 for containing the product to be dispensed, made preferably of plastic transparent material. In the illustrated case, the apparatus comprises two tanks 2 for containing the product, arranged side by side, for preparing and dispensing different products, but it is obviously possible to provide a different number of these tanks 2, in particular one single tank. The tanks 2 are open at the top and provided with a relative lid 12.

The two tanks 2 are mounted on a single base body 10. The base body 10 has a substantially prismatic shape and is predisposed to contain in its inside the operation members of the apparatus, known per se. In particular, inside the base body 10 a refrigeration system is housed comprising, in substantially known manner, a compressor and a condenser.

Inside each containment tank 2 a mixing device 3 is arranged and comprises a screw member 13 driven in rotation according to an axis longitudinal to the tank 2 to determine the continuous circulation of the product inside the same tank 2. The blades of the screw member 13 are predisposed to keep the product well-blended and to convey it towards the front zone of the tank 2, where the dispensing zone is arranged.

Furthermore, inside the tank 2 a cooling device 4 is arranged for cooling the product to the suitable temperature. The cooling device 4 is preferably made up of a coil evaporator 14 arranged inside a substantially cylindrical tubular body 5. The cylindrical body 5 is mounted with horizontal axis, according to the above-mentioned rotation axis of the screw member 13.

The containment tank 2 frontally has a dispenser device 6 in communication with the lower portion of the same tank 2. The dispenser device 6 is provided with a shutter member that can be operated by an outer lever member 7. The shutter member can slide inside a cylindrical seat constituted, with substantially vertical axis, by a sleeve shaped by the tank 2. More precisely the shutter is mobile, in known manner, by abutting elastic means, between a closure position and an open position of a hole of the sleeve.

Inside the containment tank 2 a heat sensor 9 is further arranged, being predisposed to control the temperature of the product at the dispensing zone. The temperature sensor 9 preferably protrudes from the cylindrical body 5 of the cooling device 4, close to the front wall of the tank 2.

The screw member 13 of the mixing device 3 extends on the external surface of the cylindrical body 5 and is driven in rotation by a shaft 15 that axially crosses the same cylindrical body 5. The shaft 15 is predisposed to be operated by a motor member 20, preferably an electric motor, for example a brushless motor, through a suitable reduction member; the reduction member is contained inside a box-casing 21, with which the electric motor is associated. In the following, for simplicity, reference is made to such motor member with the term gearmotor.

Preferably, the gearmotor member 20 can swing according to an axis substantially longitudinal to the containment tank 2. In particular, the casing 21 of the gearmotor 20 can tilt on a vertical plane, according to the rotation axis of the shaft 15. The gearmotor 20 is housed inside a shoulder 16 raising from the rear part of the base body 10 and carries the cylindrical body 5 in cantilevered manner.

The gearmotor 20 is stressed by an elastic member 22, for example a helical spring acting on the casing 21. Preferably, the compression degree of the elastic member 22 is adjustable by an adjustment screw 23.

As better described below, the angular rotation of the gearmotor 20 is predisposed to operate a device 30 for controlling the consistency of the products being prepared within the tank 2. Such product consistency control device 30 comprises a first microswitch 31 and a second microswitch 32, both housed alongside the gearmotor 20 and predisposed to be selectively operated by the angular rotation of the gearmotor 20. The signal generated by the operation of the microswitches 31, 32 is sent to the electronic control board of the apparatus, in particular for the refrigeration system management.

The first microswitch 31 is located above the second microswitch 32 and is intended to be operated before the second microswitch 32 by the angular rotation of the gearmotor 20. More specifically, the first microswitch 31 is provided with a lever 33, of suitable length, by which it is predisposed to operate the second microswitch 32. The gearmotor 20 is also usefully provided, on one side, with a plane 24 of metal material for increasing the contact surface with the lever 33 of the first microswitch 31, so as to prevent block or false activation problems.

Suitably, the first microswitch 31 and the second microswitch 32 are predisposed to be selectively operated through a special diverter member. In practice, such diverter member is predisposed to deactivate the first microswitch 31, simultaneously operating the second microswitch 32, and vice versa depending on the characteristics of the product to be obtained.

The functioning of the apparatus is easy to understand from the description above.

After introducing the product into the tank 2, through the upper opening, the preparation cycle is started, wherein the product is progressively frozen, passing from the liquid phase to the icy one, for example as granite. In particular, the cooling device 4 is operated and the screw member 13 of the mixing device 3 is operated in rotation at a predetermined speed.

At this stage, the consistency of the product being prepared in the tank 2 is checked, until the predetermined consistency levels are reached according to the characteristics of the products to be obtained; for example, a more or less dense granite. Such consistency levels are defined by the adjustment of the elastic member 22.

It is known that the gearmotor applies on the screw member a torque required to overcome the resistive torque determined by the product being prepared inside the tank. Such resistive torque is substantially an indirect measurement of the consistency of the product.

As a matter of facts, when the consistency of the product increases during the freezing step, also the torque opposing the rotation of the screw member 13 increases. When this resistive torque overcomes the force exerted by the elastic member 22, an angular rotation of the casing 21 of the gearmotor 20, which is carried tilting according to the rotation axis of the screw member 13, is obtained. This angular rotation determines the operation of the first microswitch 31 which sends a signal to the control board of the refrigeration system.

Then, the switching off of the refrigeration system is commanded, at a first level of consistency of the product, such as a fine granite.

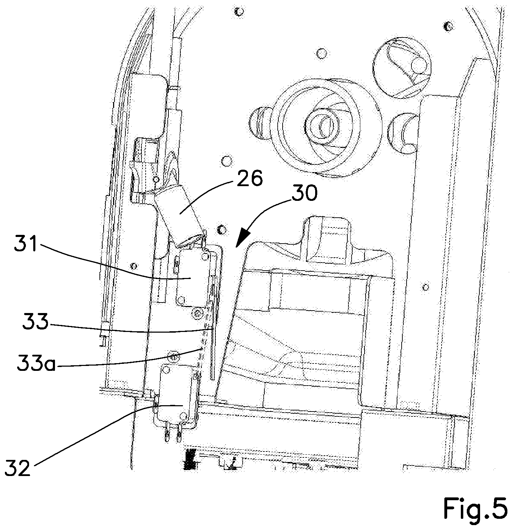

In case, on the other hand, a greater consistency of the product, such as a dense granite, is desired, the first microswitch 31 is deactivated through a special diverter, and the second microswitch 32 is simultaneously operated. The cooling cycle of the product contained in tank 2 continues until the resistive torque opposing the rotation of the screw member 13, by overcoming the force exerted by the elastic member 22, produces an angular rotation of the gearmotor 20 such that it determines the operation of the second microswitch 32 which sends a signal to the control panel of the refrigeration system. In particular, the second microswitch 32 is operated by the angular rotation of the lever 33 of the first microswitch 31, as indicated by the dotted line 33a of Fig. 5.

Then, the switching off of the refrigeration system is commanded, at a second level of consistency of the product, for example a dense granite.

In substance, the selective operation of the first microswitch 31 and of the second microswitch 32 occurs respectively at a first degree of rotation and at a second degree of rotation of the gearmotor.

Suitably, in both cases, after the switching off of the refrigeration system at the required consistency level, it is possible to trigger a series of shorter switching on/off cycles in order to maintain unaltered the achieved consistency of the product, that is to stabilize the consistency of the product at the predetermined consistency level of the product.

In both cases, at the end of this consistency stabilization step, the temperature of the product is measured within the tank 2, through the temperature sensor 9 projecting in front of the cylindrical body 5. This temperature of the product, corresponding to the achievement of the predetermined consistency level, is assumed as the reference temperature for the subsequent operation of the apparatus. From this moment on, the working step at speed of the apparatus begins, wherein the product, brought to the correct consistency, is maintained in such condition by controlling its temperature. In particular, the temperature of the product is continuously monitored to maintain said reference temperatu re.

When required, the dispensing of the product performed by operating the dispenser device 6 through the lever member 7.

The apparatus according to the invention thus achieves the scope of optimizing the control of the consistency of the dispensed products. In particular, the apparatus allows to vary the consistency of the dispensed products as needed.

An advantageous aspect of the invention is that the adjustment of the consistency of the product is achieved through a single adjustable elastic member. The selective use of two microswitches, as described above, allows extending the range of regulation offered by the single elastic member.

The apparatus described by way of example is susceptible of numerous modifications and variations according to the different needs. In the preceding description reference has been made to an apparatus for preparing and dispensing of refrigerated products; it is however evident that the object of the invention can be advantageously applied also to apparatuses for preparing and dispensing hot beverages and the like.

In practice, the embodiment of the invention, the used materials, as well as the shape and dimensions, may vary depending on the requirements.

Should the technical characteristics mentioned in each claim be followed by reference signs, such reference signs were included strictly with the aim of enhancing the understanding the claims and hence they shall not be deemed restrictive in any manner whatsoever on the scope of each element identified for exemplifying purposes by such reference signs.

## Claims

1. Apparatus for preparing and dispensing food products, comprising
at least one containment tank (2) predisposed to contain a product to be prepared and mounted on a base body (10);
cooling or heating means (4) of the product contained in said containment tank (2);
a mixing device (3) arranged inside said containment tank (2) and predisposed to cause a continuous circulation of the product inside said containment tank (2), for conveying the product towards a front zone of said containment tank (2);
a gearmotor member (20) predisposed to operate in rotation said mixing device (3) according to an axis substantially longitudinal to said tank (2), said gearmotor member (20) being mounted in tilting manner with respect to said axis substantially longitudinal to said containment tank (2);
a dispenser device (6) of the product, placed at said front zone of said containment tank (2);
elastic means (22) contrasting the resistive torque that opposes the rotation of said mixing device (3);
consistency control means (30) for controlling the consistency of the product being prepared inside said tank (2) comprising a first microswitch (31) and a second microswitch (32) predisposed to be selectively operated by the angular rotation of said gearmotor member (20), for controlling the stop of said cooling or heating means (4), depending on said resistive torque opposing the rotation of said mixing device (3).

2. Apparatus according to claim 1, **characterized in that** said first microswitch (31) and said second microswitch (32) are predisposed to be operated respectively when a first threshold value and a second threshold value of the resistance provided by said elastic means (22) are exceeded.

3. Apparatus according to claim 1 or 2, **characterized in that** said angular rotation of said gearmotor member (20) is produced when said resistive torque opposing the rotation of said mixing device (3) overcomes the force exerted by said elastic means (22).

4. Apparatus according to one of the preceding claims, **characterized in that** it comprises temperature control means (9) for controlling the temperature of the product at the dispensing zone.

5. Apparatus according to claim 4, **characterized in that** said temperature control means (9) comprise a temperature sensor associated with said cooling or heating means (4) close to said front zone of said containment tank (2)

6. Apparatus according to one of the preceding claims, **characterized in that** said first microswitch (31) is arranged above said second microswitch (32) and is predisposed to be operated before said second microswitch (32) by said angular rotation of said gearmotor member (20).

7. Apparatus according to claim 6, **characterized in that** said first microswitch (31) is provided with a lever (33) through which said second microswitch (32) is predisposed to be operated.

8. Apparatus according to one of the preceding claims, **characterized in that** said elastic means (22) comprise a helical spring compressing a casing (21) of said gearmotor member (20) and having compression adjustable through an adjusting screw (23).

9. Apparatus according to one of the preceding claims, **characterized in that** said first microswitch (31) and said second microswitch (32) are predisposed to be selectively operated through a diverting member.

10. Apparatus according to one of the preceding claims, **characterized in that** said mixing device (3) comprises a screw member (13) which is driven in rotation by a shaft (15) arranged according to said axis substantially longitudinal to said tank (2) and associated with said gearmotor member (20).

11. Method for controlling the consistency of the product in an apparatus for preparing and dispensing food products according to one of the previous claims, **characterized in that** it provides to operate selectively said first microswitch (31) and second microswitch (32) through the angular rotation of said gearmotor member (20), and to command the stop of said cooling or heating means (4) respectively upon exceeding a first threshold value and a second threshold value of the resisting force offered by said elastic means (22).

## Patentansprüche

1. Einrichtung zum Vorbereiten und Ausgeben von Lebensmittelprodukten, die Folgendes umfasst
mindestens einen Einschlussbehälter (2), der dazu ausgelegt ist, ein Produkt, das zuzubereiten ist, zu enthalten, und an einem Basiskörper (10) montiert ist; ein Kühl- oder Heizmittel (4) des Produkts, das im Einschlussbehälter (2) enthalten ist;
eine Mischvorrichtung (3), die im Einschlussbehälter (2) angeordnet und dazu ausgelegt ist, zum Übertragen des Produkts in eine vordere Zone des Einschlussbehälters (2) eine kontinuierliche Zirkulation des Produkts im Einschlussbehälter (2) zu bewirken;
ein Getriebemotorelement (20), das dazu ausgelegt ist, die Mischvorrichtung (3) gemäß einer Achse, die im Wesentlichen in Längsrichtung des Behälters (2) verläuft, in Drehung zu betätigen, wobei das Getriebemotorelement (20) mit Bezug auf die Achse, die im Wesentlichen in Längsrichtung des Einschlussbehälters (2) verläuft, in einer geneigten Weise montiert ist;
eine Ausgabevorrichtung (6) des Produkts, die in der vorderen Zone des Einschlussbehälters (2) platziert ist;
ein elastisches Mittel (22) das dem Widerstandsmoment, das gegen die Drehung der Mischvorrichtung (3) wirkt, entgegengesetzt ist;
ein Konsistenzsteuermittel (30) zum Steuern der Konsistenz des Produkts, das im Behälter (2) zubereitet wird, das einen ersten Mikroschalter (31) und einen zweiten Mikroschalter (32) umfasst, die dazu ausgelegt sind, zum Steuern des Abschaltens des Kühl- oder Heizmittels (4) durch die Winkeldrehung des Getriebemotorelements (20) in Abhängigkeit vom Widerstandsmoment, das gegen die Drehung der Mischvorrichtung (3) wirkt, selektiv betätigt zu werden.

2. Einrichtung nach Anspruch 1, **dadurch gekennzeichnet, dass** der erste Mikroschalter (31) bzw. der zweite Mikroschalter (32) dazu ausgelegt sind, betätigt zu werden, wenn ein erster Schwellwert und ein zweiter Schwellwert des Widerstands, der vom elastischen Mittel (22) bereitgestellt wird, überschritten werden.

3. Einrichtung nach Anspruch 1 oder 2, **dadurch gekennzeichnet, dass** die Winkeldrehung des Getriebemotorelements (20) produziert wird, wenn das Widerstandsmoment, das gegen die Drehung der Mischvorrichtung (3) wirkt, die Kraft, die vom elastischen Mittel (22) ausgeübt wird, überwindet.

4. Einrichtung nach einem der vorhergehenden Ansprüche, **dadurch gekennzeichnet, dass** sie ein Temperatursteuermittel (9) zum Steuern der Temperatur des Produkts in der Ausgabezone umfasst.

5. Einrichtung nach Anspruch 4, **dadurch gekennzeichnet, dass** das Temperatursteuermittel (9) einen Temperatursensor, der mit dem Kühl- oder Heizmittel (4) verknüpft ist, in der Nähe der vorderen Zone des Einschlussbehälters (2) umfasst.

6. Einrichtung nach einem der vorhergehenden Ansprüche, **dadurch gekennzeichnet, dass** der erste Mikroschalter (31) über dem zweiten Mikroschalter (32) angeordnet und dazu ausgelegt ist, durch die Winkeldrehung des Getriebemotorelements (20) vor dem zweiten Mikroschalter (32) betätigt zu werden.

7. Einrichtung nach Anspruch 6, **dadurch gekennzeichnet, dass** der erste Mikroschalter (31) mit einem Hebel (33) versehen ist, über den der zweite Mikroschalter (32) dazu ausgelegt ist, betätigt zu werden.

8. Einrichtung nach einem der vorhergehenden Ansprüche, **dadurch gekennzeichnet, dass** das elastische Mittel (22) eine Schraubenfeder umfasst, die ein Gehäuse (21) des Getriebemotorelements (20) zusammendrückt und eine Komprimierung aufweist, die über eine Einstellschraube (23) einstellbar ist.

9. Einrichtung nach einem der vorhergehenden Ansprüche, **dadurch gekennzeichnet, dass** der erste Mikroschalter (31) und der zweite Mikroschalter (32) dazu ausgelegt sind, durch ein Umlenkelement selektiv betätigt zu werden.

10. Einrichtung nach einem der vorhergehenden Ansprüche, **dadurch gekennzeichnet, dass** die Mischvorrichtung (3) ein Schraubenelement (13) umfasst, das von einer Welle (15), die gemäß der Achse im Wesentlichen in Längsrichtung des Behälters (2) angeordnet und mit dem Getriebemotorelement (20) verknüpft ist, in Drehung angetrieben wird.

11. Verfahren zum Steuern der Konsistenz des Produkts in einer Einrichtung zum Zubereiten und Ausgeben von Lebensmittelprodukten nach einem der vorhergehenden Ansprüche, **dadurch gekennzeichnet, dass** es vorsieht, dass der erste Mikroschalter (31) und der zweite Mikroschalter (32) über die Winkeldrehung des Getriebemotorelements (20) selektiv betätigt werden und das Abschalten des Kühl- oder Heizmittels (4) nach Überschreiten eines ersten Schwellwerts bzw. eines zweiten Schwellwerts der Widerstandskraft, die vom elastischen Mittel (22) aufgebracht wird, angewiesen wird.

## Revendications

1. Appareil de préparation et de distribution de produits alimentaires, comprenant
au moins un réservoir de confinement (2) prédisposé à contenir un produit à préparer et à monter sur un corps de base (10) ;
des moyens de refroidissement ou de chauffage (4) du produit contenu dans ledit réservoir de confinement (2) ;
un dispositif de mélange (3) disposé à l'intérieur dudit réservoir de confinement (2) et prédisposé à provoquer une circulation continue du produit à l'intérieur dudit réservoir de confinement (2), pour transporter le produit vers une zone avant dudit réservoir de confinement (2) ;
un élément motoréducteur (20) prédisposé à actionner en rotation ledit dispositif de mélange (3) selon un axe sensiblement longitudinal par rapport audit réservoir (2), ledit élément motoréducteur (20) étant monté de manière basculante par rapport audit axe sensiblement longitudinal par rapport audit réservoir de confinement (2) ;
un dispositif de distribution (6) du produit, placé au niveau de ladite zone avant dudit réservoir de confinement (2) ;
des moyens élastiques (22) opposant le couple résistif qui s'oppose à la rotation dudit dispositif mélangeur (3) ;
des moyens de contrôle de consistance (30) pour contrôler la consistance du produit étant préparé à l'intérieur dudit réservoir (2) comprenant un premier micro-interrupteur (31) et un second micro-interrupteur (32) prédisposés à être actionnés sélectivement par la rotation angulaire dudit élément motoréducteur (20), pour contrôler l'arrêt desdits moyens de refroidissement ou de chauffage (4), en fonction dudit couple résistif s'opposant à la rotation dudit dispositif de mélange (3).

2. Appareil selon la revendication 1, **caractérisé en ce que** ledit premier micro-interrupteur (31) et ledit second micro-interrupteur (32) sont prédisposés à être actionnés respectivement quand une première valeur de seuil et une seconde valeur de seuil de la résistance fournie par lesdits moyens élastiques (22) sont dépassées.

3. Appareil selon la revendication 1 ou 2, **caractérisé en ce que** ladite rotation angulaire dudit élément motoréducteur (20) est produite quand ledit couple résistif s'opposant à la rotation dudit dispositif de mélange (3) surmonte la force exercée par lesdits moyens élastiques (22).

4. Appareil selon l'une des revendications précédentes, **caractérisé en ce qu'il** comprend des moyens de contrôle de température (9) pour contrôler la température du produit au niveau de la zone de distribution.

5. Appareil selon la revendication 4, **caractérisé en ce que** lesdits moyens de contrôle de température (9) comprennent un capteur de température associé auxdits moyens de refroidissement ou de chauffage (4) à proximité de ladite zone avant dudit réservoir de confinement (2).

6. Appareil selon l'une des revendications précédentes, **caractérisé en ce que** ledit premier micro-interrupteur (31) est disposé au-dessus dudit second micro-interrupteur (32) et est prédisposé à être actionné avant ledit second micro-interrupteur (32) par ladite rotation angulaire dudit élément motoréducteur (20).

7. Appareil selon la revendication 6, **caractérisé en ce que** ledit premier micro-interrupteur (31) est muni d'un levier (33) à travers lequel ledit second micro-interrupteur (32) est prédisposé à être actionné.

8. Appareil selon l'une des revendications précédentes, **caractérisé en ce que** lesdits moyens élastiques (22) comprennent un ressort hélicoïdal comprimant un carter (21) dudit élément motoréducteur (20) et ayant une compression réglable à travers une vis de réglage (23).

9. Appareil selon l'une des revendications précédentes, **caractérisé en ce que** ledit premier micro-interrupteur (31) et ledit second micro-interrupteur (32) sont prédisposés à être actionnés sélectivement à travers un élément de déviation.

10. Appareil selon l'une des revendications précédentes, **caractérisé en ce que** ledit dispositif de mélange (3) comprend un élément de vis (13) qui est entraîné en rotation par un arbre (15) disposé selon ledit axe sensiblement longitudinal par rapport audit réservoir (2) et associé audit élément motoréducteur (20).

11. Procédé de contrôle de la consistance du produit dans un appareil de préparation et de distribution de produits alimentaires selon l'une des revendications précédentes, **caractérisé en ce qu'**il prévoit d'actionner sélectivement lesdits premier micro-interrupteur (31) et second micro-interrupteur (32) à travers la rotation angulaire dudit élément motoréducteur (20), et de commander l'arrêt desdits moyens de refroidissement ou de chauffage (4) respectivement lors du dépassement d'une première valeur de seuil et d'une seconde valeur de seuil de la force de résistance offerte par lesdits moyens élastiques (22).
